# EUROPÄISCHE PATENTSCHRIFT

(11) **EP 0 658 733 B1**
(45) Veröffentlichungstag und Bekanntmachung des Hinweises auf die Patenterteilung: **20.05.1998**
(21) Anmeldenummer: 94116450.1
(22) Anmeldetag: 19.10.1994
(51) Int. Cl.: F25D 23/06

(54) **Kühl- und/oder Gefriergerät**
Refrigerator/freezer
Réfrigérateur/congélateur

(30) Priorität: 16.12.1993 DE 4342947
(43) Veröffentlichungstag der Anmeldung: 21.06.1995
(73) Patentinhaber: AEG Hausgeräte GmbH, 90429 Nürnberg (DE)
(72) Erfinder: Jürgensen, Heinz, Dr.-Ing., D34253 Lohfelden (DE); Krug, Günter, Dipl.-Ing., D-34302 Guxhagen (DE)

(56) Entgegenhaltungen:
- CH-A- 664 625
- DE-U- 8 631 174
- DE-U- 9 204 365
- FR-A- 2 086 390
- GB-A- 529 477
- US-A- 2 480 257

## Beschreibung

Die Erfindung betrifft ein Kühl- und/oder Gefriergerät mit einem Wärmeisolationspaneel.

Zur Verbeserung von thermischen Isolierungen ist das Prinzip der Vakuumwärmeisolation-spaneele bekannt. Ein bekanntes Wandpaneel dieser Art (DE-OS 24 37 315) ist zwischen zwei parallel zueinander angeordneten Wandflächen aus Metallblechen mit einem Stützmittel in Form von Stützstegen versehen, wobei die Randbereiche der deckungsgleichen, gleichgroßen Wandflächen mittels Abschlußelementen gasdicht miteinander verbunden sind. Der das Stützmittel aufnehmende, von den Wandflächen und den Abschlußelementen umschlossene Hohlraum ist dabei weitgehend evakuiert, wodurch ein Vakuumwärmeisolationspaneel mit sehr geringem Wärmedurchgang geschaffen ist. Probleme bestehen jedoch dann, wenn derartige Wärmeisolationspaneele unter einem Winkel, insbesondere rechtwinklig zusammenzufügen sind, wie es bei wärmeisolierten Behältern erforderlich ist. Im Kantenbereich von aneinanderstoßenden Wärmeisolationspaneelen kommt zumindest eine der innenliegenden Wandflächen mit der Außenatmosphäre in Kontakt, wobei diese Wandfläche aufgrund der erforderlichen mechanischen Stabilität auch eine entsprechend hohe Wärmeleitfähigkeit besitzt. Es müssen dann an der Außenseite zusätzliche Isoliermaßnahmen getroffen werden.

Der Erfindung liegt die Aufgabe zugrunde, ein Kühl- und/oder Gefriergerät mit einem Wärmeisolationspaneel, bei dem vakuumisolierte Wärmeisolationspaneele besonders vorteilhaft und unter guter Vermeidung von Wärmebrücken eingesetzt sind.

Die Lösung dieser Aufgabe erfolgt gemäß der Erfindung durch die Merkmale des ersten Anspruchs.

Bei einer Ausgestaltung eines Kühl- und/oder Gefriergeräts mit einem Wärmeisolationspaneel gemäß der Erfindung wird im Kantenbereich von winklig aneinander angesetzten Wärmeisolationselementen erreicht, daß die innenliegenden Wandflächen der Elemente im Bereich der Innenkante enden, so daß das jeweils zugehörige, insbesondere als dünne Membran ausgebildete Abschlußelement zwischen zusammengehörigen Wandflächen die einzige Verbindung zwischen dem kalten, von den Wärmeisolationselementen umschlossenen Raum und der demgegenüber warmen Außenatmosphäre bildet. Das Gehäuse für das in der Regel schrank- oder truhenförmige Kühl- und Gefriergerät ist dadurch aus einzelnen, in dieser Weise ausgebildeten Wärmeisolationspaneelen zusammengefügt, wobei auch die erforderliche Tür oder der Klappdeckel in entsprechender Weise mit dem erfindungsgemäß ausgebildeten Wandbereich eines Wärmeisolationspaneels in Eingriff gebracht werden kann. Im Bereich einer Tür bzw. eines Deckels ergibt sich dabei die Möglichkeit zur Anbringung einer Türdichtung in einem als Labyrinth ausgebildeten Türspalt sowie die Befestigung von Teilen eines Türlagers an der außenliegenden Wandfläche des benachbarten Wärmeisolationspaneels. Es wird somit insbesondere eine Minimierung der Wärmeverluste bei Eckverbindungen durch eine Randgestaltung erreicht, die nach Art einer Gehrung ausgebildet ist und stufig oder geradlinig bei entsprechender Neigung gestaltet sein kann. Durch den gehrungsartigen Verlauf des Abdeckelements ergibt sich zudem eine Wegverlängerung zwischen innerer und äußerer Wandfläche eines Paneels und damit ein höherer Wärmeübergangswiderstand im Membranbereich. Dabei ermöglicht die Ausbildung der Membran als Stufengebilde eine weitere Wegverlängerung. Im Bereich einer Tür ergibt sich zudem eine günstige, einfach zu realisierende Form für die Türlabyrinthgestaltung. Die Anbringung eines Türlagers oder anderer Bauelemente wie beispielsweise Regel-, Steuer- oder Anzeigeelemente an der Außenseite läßt sich in einfacher Weise dadurch realisieren, daß der den zurückgesetzen inneren Rand radial überragende äußere Rand des Wärmeisolationspaneels über den Verbindungsbereich des Abschlußelements mit diesem äußeren Rand über die Verbindungsstelle nach außen ragt. Bohrungen und dgl. in diesem überragenden Randbereich führen so zu keiner Verletzung des evakuierten Hohlraums. Der zurückgesetzte Rand der inneren Wandfläche kann dagegen wenigstens eine abgewinkelte, sich zumindest über einen Teil der Länge des Randes erstreckende Lasche aufweisen, die vom evakuierten Hohlraum wegweist und ebenfalls außerhalb des Verbindungsbereichs mit dem Membran liegt, so daß diese Lasche für die Befestigung von anderen Bauteilen beispielsweise durchbohrt werden kann, ohne den vakuumdichten Abschluß des evakuierten Hohlraums zu gefährden.

Abschlußelemente von winklig aneinander angesetzten Wärmeisolationspaneelen kommen bei gehrungsartig ausgestalteter Membranführung flächendeckend eng benachbart in Gegenüberstellung. Dabei kann der ggf. labyrinthartig gestaltete Spalt zwischen den einzelnen Wärmeisolationspaneelen mit einer insbesondere elastisch bleibenden Dichtungsmasse ausgefüllt, insbesondere verklebt sein, sofern die mechanische Stabilität der Membran das zuläßt. Diese Anordnung kann auch zur Anwendung gelangen, wenn eines der Wärmeisolationspaneele als Tür oder Deckel ausgebildet und die zwischengefügte Dichtung leicht von einem Teil lösbar ist. Bei mehrstufig, insbesondere zweistufig ausgebildetem Abschlußelement kann in die dem zurückgesetzten Rand eines Wärmeisolationspaneels naheliegende Stufe der Kantenbereich einer rechtwinklig zu den Wandflächen dieses Wärmeisolationspaneels stehenden Wandelements eingreifen. Der schmalen Stirnfläche des Wandelements steht dann noch ein wärmeisolierter Bereich des z.B. als Tür ausgebildeten stufigen Paneels gegenüber. Um das als dünne Membran ausgebildete Abschlußelement im Eingriffbereich der Tür gegen mechanische Beschädigung zu schützen, ist es mittels einer angepaßten Abdeckleiste aus wärmeisolierendem Material ausreichender mechanischer Stabilität abgedeckt. Es reicht dabei vorzugsweise bis in den Kühlraum eines in dieser Weise aufgebauten Kühlgeräts hinein und kann dort mit der am Rand der innenliegenden Wandfläche verbundenen Haltelasche verbunden sein. Die Abdeckleiste ist dabei der Stufenform der Membran angepaßt und liegt somit zwischen der Tür und dem jeweils benachbarten Wandelement. Zwischen die Abdeckleiste und die benachbarten Abschnitte des Wandelements läßt sich dann in einfacher Weise eine Türdichtung einfügen. Das Wandelement kann dabei ebenfalls als vakuumisoliertes Wärmeisolationspaneel ausgebildet sein, deren dem Abschlußelement zugewandte Stirnfläche parallel zur Türfläche stehen kann, wobei die Stirnfläche gegenüber einer ebenfalls gegenüber den Randzonen zurückgesetzten Membran ihrerseits eine Abdeckleiste aus wärmeisolierendem Material aufweisen kann.

Vorteilhafte weitere Ausgestaltungen ergeben sich aus den nachfolgend näher erläuterten Zeichnungen.

Es zeigen:
- Fig. 1: ein Wärmeisolationspaneel mit geradliniger, geneigter Stirnfläche,
- Fig. 2: ein Wärmeisolationspaneel mit stufig ausgebildeter Stirnfläche,
- Fig. 3: rechtwinklig aneinandergesetzte Wärmeisolationspaneele und
- Fig. 4: ein Wärmeisolationselement mit stufig abfallender Stirnfläche und einem zugeordneten, senkrecht dazustehenden Wandelement.

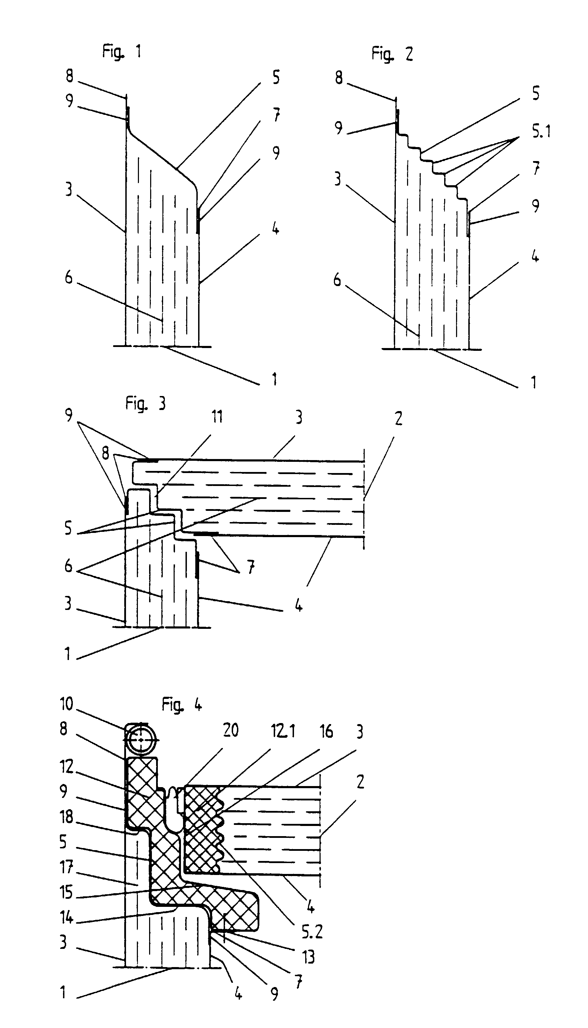

Ein planes oder ggf. auch gewölbtes Wärmeisolationspaneel 1, das für das Zusammenwirken mit wenigstens einem dazu im wesentlichen rechtwinklig stehenden Wandelement 2 bestimmt ist und wie letzteres insbesondere Teil eines wärmeisolierten Behälters bei Kühl- oder Gefriergeräten ist, besteht aus einer außenliegenden Wandfläche 3 und einer mit Abstand davon parallel angeordneten inneren Wandfläche 4, die in ihrem Randbereich mittels eines dicht angesetzten Abschlußelements 5, das eine Stirnfläche bildet, vakuumdicht miteinander verbunden sind. Der von den Wandflächen 3,4 und dem oder den Abschlußelementen 5 umschlossene Raum ist mit mindestens einem Stützmittel, insbesondere Kieselsäurepulver oder einer Faserpackung gefüllt und weitgehend evakuiert. Die bei Anwendung des Wärmeisolationspaneels 1 bei einem Behälter innenliegende Wandfläche 4 ist kleiner als die außenliegende Wandfläche 3 ausgebildet, so daß wenigstens einer ihrer Ränder 7 gegenüber dem entsprechenden Rand 8 der äußeren Randfläche 3 zurückgesetzt ist. Das Abschlußelement 5 ist dabei unmittelbar an den zurückgesetzten Rand 7 angeschweißt, angeklebt oder in sonst geeigneter Weise vakuumdicht angesetzt, und verläuft nach Art einer Gehrungskante geradlinig unter einer Neigung (Fig.1) oder in wenigstens zwei Stufen (Fig. 2) in den Bereich des benachbarten, überstehenden Randes 8 der äußeren Wandfläche 3. Das Wärmeisolationspaneel 1 ist dabei vorzugsweise als Tür oder Klappdeckel eines schrank- oder truhenförmigen Kühl- oder Gefriergeräts ausgebildet, während das Wandelement 2 Teil einer ein- oder mehrstückigen Behälterwandung sein kann. Das Wandelement 2 kann dabei ebenfalls als vakuumisoliertes Wärmeisolationspaneel ausgebildet sein, wie es Fig. 3 zeigt. Die Längsränder des als Membran aus schlecht wärmeleitendem Werkstoff ausgebildeten Abschlußelements 5 sind im Bereich der Ränder 7,8 an Verbindungsstellen 9 entlang des jeweiligen Randes 7,8 festgelegt, wobei der den zurückgesetzten Rand 7 überragende Rand 8 über den Verbindungsbereich des Abschlußelements 5 mit diesem Rand 8 im Bedarfsfall hinausragt, wie es die Fig. 1,2 und 4 zeigen. Der überragende, außerhalb des vakuumisolierten Teils liegende Randbereich kann dann in üblicher Weise bearbeitet werden und für ein Zusammenfügen von winklig zueinanderstehenden Elementen 1,2 dienen oder für die Anbringung von Türlagerteilen 10 oder die Halterung von Steuer-, Regel- und Anzeigeelementen oder dergl. Mittel dienen.

Nachdem das Abschlußelement 5 im Bereich der versetzt zueinander angeordneten Ränder 7,8 nach Art einer Gehrungsfläche ausgebildet ist, können die Abschlußelemente 5 von winklig aneinander angesetzten Wärmeisolationspaneelen aneinander flächendeckend eng benachbart zugeordnet sein, wie es Fig. 3 zeigt. Das hier am Wärmeisolationspaneel 1 wie am Wandelement 2 stufig ausgebildete Abschlußelement 5 greift mit seinen einzelnen Stufen 5.1 nach Art einer Verzahnung ineinander, wodurch sich eine optimale gegenseitige Abstützung ergibt. Zudem verlängert sich bei stufiger Ausbildung der Membran 5 der dadurch gegebene Wärmeleitweg gegenüber einer geradlinigen Gestaltung nach Fig. 4, so daß über das Abdeckelement 5 nur eine sehr geringe Wärmemenge je Zeiteinheit über die Abschlußelemente 5 transportiert wird. Auch der zwischen den Abschlußelementen 5 liegende Spalt 11 wird in entsprechender Weise labyrinthartig verlängert, so daß auch bei Verwendung des Wärmeisolationspaneels 1 als Tür der Luftweg entsprechend verlängert wird. Bei fester Verbindung der Elemente 1,2 kann der Spalt für das Einbringen von wärmedämmenden Dichtungsmitteln oder Klebstoff verwendet werden. In diesem Falle ist es zweckmäßig, bei den Elementen 1,2 nach Fig. 3 die Ränder 7,8 soweit nach außen zu verlängern, daß sie mechanisch miteinander verbunden und für einen starren Zusammenhalt der Elemente 1,2 herangezogen werden können.

Bei der Ausführungsform nach Fig. 4 ist das Abschlußelement 5 mit zwei Stufen 14,18 ausgebildet, wobei der Rand 8 über die Verbindungsstelle 9 mit der zugehörigen äußeren Wandfläche 3 hinausgezogen ist und das Scharnierteil 10 trägt. Dabei dient das Wärmeisolationspaneel 1 als Tür oder Deckel eines Kühlgeräts. Zum Schutz der aus sehr dünnem Metallblech bestehenden Membran 5 ist ihr eine im Profil angepaßte Abdeckleiste 12 zugeordnet, die vom Rand 8 bzw. dem Verbindungsbereich 9 der äußeren Wandfläche 3 bis zum Verbindungsbereich 9 an der inneren Wandfläche 4 reicht und dort an einer abgekanteten Lasche 13 befestigt ist, die vorzugsweise einstückig mit dem zurückgesetzten Rand 7 verbunden ist. Die Lasche 13 kann auch für weitere Türeinbauten oder zur Halterung von Abstellfächern herangezogen werden und kann sich über die gesamte Länge des betreffenden Randes 7 erstrecken. Es können jedoch auch einzelne Laschen am Rand 7 ausgebildet sein. Die Abdeckleiste 12 kann unter Zuhilfenahme eines Dichtmittels dicht mit der Membran 5 verbunden und ggf. verklebt sein. In die dem zurückgesetzten Rand 7 des Wärmeisolationspaneels 1 naheliegende Stufe 14 bzw. den entsprechenden Stufenabsatz 15 der Abdeckleiste 12 greift der benachbarte innenliegende Kantenbereich des benachbarten Wandelements 2, so daß der Stirnfläche 16 des Wandelements 2 außer dem betreffenden Abschnitt der Abdeckleiste 12, die aus schlecht wärmeleitendem Material besteht, auch ein vakuumisolierter Abschnitt 17 im Bereich der außenliegende Stufe 18 gegenübersteht. Zwischen der Stirnfläche 16 des Wandelements 2 und der Abdeckleiste 12 befindet sich eine Dichtung 20, die bei geschlossener Tür einen luftdichten Abschluß zwischen den Elementen 1 und 2 bewirkt. Das Wandelement 2, das ebenfalls als Vakuumisolationspaneel ausgebildet und im Randbereich mit einem Abschlußelement 5.2 in Form einer gewellten Membran abgeschlossen ist, trägt an seiner dem Abschlußelement 5 zugewandten schmalen Stirnfläche 16 eine Abdeckleiste 12.1, die wie die Abdeckleiste 12 aus wärmeisolierendem Material besteht und das Abschlußelement 5.2 gegen Zugriff oder Beschädigung schützt. Es kann zugleich einen magnetischen Gegenpolstreifen halten, der als magnetisches Gegenlager für einen der Dichtung 20 zugeordneten Magnetstreifen dient.

Die Längsränder des Abdeckelements 5 können wahlweise auf die Außen-oder Innenseite der als Edelstahlbleche ausgebildeten Wandflächen 3 oder 4 geschweißt, geklebt oder dergl. sein. Der äußere überstehende Rand 8 kann auch zur Anbringung von Dekorteilen, einem Dekorrahmen oder einem Türgriff dienen und zu deren Befestigung gelocht sein. Auch kann der Spalt 11 zwischen auf Gehrung zusammengestellten Elementen 1,2 mit einem Wärme schlechtleitendem Material, z.B. Kunststoffschaum zumindest teilweise gefüllt sein.

Durch die stufige Gestaltung des Abschlußelements 5 entsprechend Fig. 4 ist es möglich, den der Stirnfläche 16 des Wandelements 2 gegenüberliegenden Randbereich des Wärmeisolationspaneels 1 dünner auszuführen als im mittleren Bereich zwischen der äußeren Wandfläche 3 und der inneren Wandfläche 4, womit dieser Bereich in den Raum zwischen den Wandelementen 2 hineinragt. Dadurch rückt das Scharnierteil 10 näher an das Wandelement 2, was besonders günstig ist bei integrierbaren oder Einbau-Kühl- oder Gefriergeräten, um ein Anstoßen der Tür an die Möbelumbauten zu verhindern.

Wird bei der Herstellung des Wärmeisolationspaneels 1 zuerst die innere Wandfläche 4 mit den Abschlußelementen 5 zusammengefügt, ergibt sich eine Art Wanne, in die das passend ausgeführte Stützmaterial 6 einfach eingelegt werden kann. Vorteilhaft ist dabei, wenn die Höhe der Stufen 14,18 der Abschlußelemente 5 auf die Dicke des meist mattenförmigen Stützmaterials 6 abgestimmt ist.

Ein weiterer Vorteil der erfindungsgemäßen Ausführung des Wärmeisolationspaneels 1 besteht darin, daß die Verbindungsstellen 9 zwischen den äußeren 3 bzw. inneren Wandflächen 4 und den Abschlußelementen 5, vorzugsweise Schweißnähte, nicht an stoßgefährdeten Kanten liegen, wie dies etwa bei dem gegenüberliegenden Wandelement der Fall ist, sondern auf den Außen- bzw. Innenflächen der Wandflächen 3,4 verlaufen. Die flächige Auflage des Abschlußelements 5 auf den Wandflächen 3,4 erfordert außerdem weniger enge Toleranzen gegenüber einer Verbindung entlang der Kanten, die genauer gegeneinander ausgerichtet werden müßten.

## Patentansprüche

1. Kühl- und/oder Gefriergerät mit einem Wärmeisolationspaneel, insbesondere für die Tür-, Deckel-, Seiten- oder Bodenwand, welches zwischen parallelen Wandflächen angeordnete Stützmittel und ein vakuum-dicht angesetztes Abschlußelement im Randbereich zwischen den Wandflächen aufweist und der das Stützmittel aufnehmende Hohlraum weitgehend evakuiert ist, wobei eine dem zu kühlenden Bereich zugewandte Wandfläche (4) wenigstens einen gegenüber dem benachbarten Rand (8) der anderen, dem Außenbereich zugewandte Wandfläche (3) zurückgesetzten Rand (7) zur Schaffung einer Wärmeleitweguerlängerung zwischen innerer und äußerer Wandfläche und damit eines höheren Wärmeübergangswiederstandes aufweist, wozu das Abschlußelement (5) unmittelbar vom zurückgesetzten Rand (7) in wenigstens zwei Stufen (5.1, 14, 18) oder geradlinig unter einer Neigung in den Bereich des benachbarten überstehenden Randes (8) der anderen Wandfläche (3) geführt ist.

2. Kühl- und/oder Gefriergerät nach Anspruch 1, dadurch gekennzeichnet, daß der den zurückgesetzten Rand (7) überragende Rand (8) über den Verbindungsbereich (9) des Abschlußelements (5) mit diesem Rand (8) hinausragt.

3. Kühl- und/oder Gefriergerät nach Anspruch 1 oder 2, dadurch gekennzeichnet, daß das Abschlußelement (5) im Bereich von versetzt zueinander angeordneten Rändern (7, 8) nach Art einer Gehrungskante ausgebildet ist.

4. Kühl- und/oder Gefriergerät nach Anspruch 3, dadurch gekennzeichnet, daß Abschlußelemente (5) von winklig aneinander angesetzten Wärmeisolationspaneelen einander flächendeckend eng benachbart zugeordnet sind.

5. Kühl- und/oder Gefriergerät nach Anspruch 1 oder einem der folgenden, dadurch gekennzeichnet, daß ein Abschlußelement (5) mehrstufig ausgebildet ist und daß in die dem zurückgesetzten Rand (7) eines Wärmeisolationspaneels (1) naheliegende Stufe (14) der Kantenbereich eines rechtwinklig zu den Wandflächen (3, 4) dieses Wärmeisolationspaneels stehenden Wandelements (2) eingreift.

6. Kühl- und/oder Gefriergerät nach Anspruch 1 oder einem der folgenden, dadurch gekennzeichnet, daß das Abschlußelement (5) mittels einer im Profil angepaßten Abdeckleisten (12, 12.1) aus wärmeisolierendem Material abgedeckt ist.

7. Kühl- und/oder Gefriergerät nach Anspruch 1 oder einem der folgenden, dadurch gekennzeichnet, daß zurückgesetzte Rand (7) wenigstens über einen Teil seiner Länge einer oder mehrere abgewinkelte Laschen (13) aufweist, an welchen eine das Abschlußelement (5) überdeckende Abdeckleiste (12) oder andere Einbauten festgesetzt ist.

8. Kühl- und/oder Gefriergerät nach Anspruch 5 oder einem der folgenden, dadurch gekennzeichnet, daß die Abdeckleiste (12) zwischen dem Abschlußelement (5) und dem Stirnkantenbereich (16) des Wandelements (2) angeordnet ist.

9. Kühl- und/oder Gefriergerät nach Anspruch 8, dadurch gekennzeichnet, daß zwischen einer Stirnfläche (16) des Wandelements (2) und der Abdeckleiste (12) eine Dichtung (20) angeordnet ist.

10. Kühl- und/oder Gefriergerät nach Anspruch 5 oder einem der folgenden, dadurch gekennzeichnet, daß das Wandelement (2) an seiner dem benachbarten Abschlußelement (5) zugewandten Stirnfläche (16) eine Abdeckleiste (12.1) aus wärmeisolierendem Material trägt, welche ein Abschlußelement (5.2) des Wandelements übergreift.

11. Kühl- und/oder Gefriergerät nach Anspruch 2 oder einem der folgenden, dadurch gekennzeichnet, daß an dem den Verbindungsbereich (9) überragenden freien Randabschnitt (8) ein Schwenklagerteil (10) und/oder Steuer-, Regel- und/oder Anzeigeelemente festgesetzt ist/sind.

12. Kühl- und/oder Gefriergerät nach Anspruch 1 oder einem der folgenden dadurch gekennzeichnet, daß das Abschlußelement (5) als Membran mit geringer Wärmeleitfähigkeit ausgebildet ist.

## Claims

1. Refrigerator and/or freezer with a heat insulating panel, more particularly for the door wall, cover wall, side wall or base wall, which comprises support means arranged between parallel wall surfaces and a sealing element which is fitted in a vacuum-tight manner in the peripheral region between the wall surfaces, and the cavity accommodating the support means is extensively evacuated, a wall surface (4) facing the region which is to be refrigerated comprising at least one edge (7) set back relative to the adjacent edge (8) of the other wall surface (3) facing the external region in order to produce a heat conduction path extension between the inner and outer wall surfaces and thus increase heat transmission resistance, to which end the sealing element (5) is guided directly from the set-back edge (7) in at least two steps (5.1, 14, 18) or linearly at an inclination into the region of the adjacent projecting edge (8) of the other wall surface (3).

2. Refrigerator and/or freezer according to claim 1, characterised in that the edge (8) projecting bevond the set-back edge (7) projects with this edge (8) beyond the connecting region (9) of the sealing element (5).

3. Refrigerator and/or freezer according to claim 1 or 2, characterised in that, in the region of edges (7, 8) offset relative to one another, the sealing element (5) is constructed in the manner of a bevelled edge.

4. Refrigerator and/or freezer according to claim 3, characterised in that sealing elements (5) of heat insulating panels fitted at angles to one another are arranged flush and closely adjacent one another.

5. Refrigerator and/or freezer according to claim 1 or one of the following, characterised in that a sealing element (5) is constructed as in stepped fashion and the edge region of a wall element (2) standing at right angles to the wall surfaces (3, 4) of a heat insulating panel (1) engages in the step (14) adjacent the set-back edge (7) of said heat insulating panel.

6. Refrigerator and/or freezer according to claim 1 or one of the following, characterised in that the sealing element (5) is covered by means of a cover strip (12, 12.1) made of heat-insulating material and having a matching profile.

7. Refrigerator and/or freezer according to claim 1 or one of the following, characterised in that the set-back edge (7), at least over part of its length, comprises one or more angled brackets (13), to which a cover strip (12) covering the sealing element (5) or other fittings is/are secured.

8. Refrigerator and/or freezer according to claim 5 or one of the following, characterised in that the cover strip (12) is arranged between the sealing element (5) and the front edge region (16) of the wall element (2).

9. Refrigerator and/or freezer according to claim 8, characterised in that a seal (20) is arranged between an end face (16) of the wall element and the cover strip (12).

10. Refrigerator and/or freezer according to claim 5 or one of the following, characterised in that, on its end face (16) facing the adjacent sealing element (5), the wall element (2) supports a cover strip (12.1) made of heat-insulating material, which engages over a sealing element (5.2) of the wall element.

11. Refrigerator and/or freezer according to claim 2 or one of the following, characterised in that a swivel bearing element (10) and/or control, regulating and/or display elements is/are secured to the free edge section (8) projecting beyond the connecting region (9).

12. Refrigerator and/or freezer according to claim 1 or one of the following, characterised in that the sealing element (5) is constructed as a diaphragm having a low degree of thermal conductivity.

## Revendications

1. Appareil de réfrigération et/ou de congélation avec un panneau d'isolation thermique, notamment pour la paroi de porte, de couvercle, latérale ou de fond qui présente des moyens de support disposés entre des surfaces de paroi parallèles et un élément de fermeture rapporté d'une manière étanche au vide dans la zone de bord entre les surfaces de paroi et où l'espace creux recevant le moyen de support est évacué dans une grande mesure, où une surface de paroi (4) orientée vers la zone à refroidir présente au moins un bord (7) décalé vers l'arrière par rapport au bord avoisinant (8) de l'autre surface de paroi (3) orientée vers la zone extérieure pour créer un allongement du trajet de conduction thermique entre les surfaces de paroi intérieure et extérieure et par conséquent une résistance plus élevée au passage de la chaleur, où l'élément de fermeture (5) est guidé directement à partir du bord (7) décalé en arrière suivant au moins deux gradins (5.1, 14, 18) ou d'une manière rectiligne suivant une inclinaison dans la zone du bord saillant avoisinant (8) de l'autre surface de paroi (3).

2. Appareil de réfrigération et/ou de congélation selon la revendication 1, caractérisé en ce que le bord (8) faisant saillie sur le bord (7) décalé en arrière fait saillie sur la zone de liaison (9) de l'élément de fermeture (5) par ce bord (8).

3. Appareil de réfrigération et/ou de congélation selon la revendication 1 ou 2, caractérisé en ce que l'élément de fermeture (5) est réalisé au voisinage de bords (7, 8) décalés l'un relativement à l'autre à la manière d'un bord en biais.

4. Appareil de réfrigération et/ou de congélation selon la revendication 3, caractérisé en ce que des éléments de fermeture (5) de panneaux d'isolation thermique assemblés suivant un angle sont associés les uns aux autres d'une manière coïncidante et étroitement avoisinante.

5. Appareil de réfrigération et/ou de congélation selon la revendication 1 ou l'une des suivantes, caractérisé en ce qu'un élément de fermeture (5) est réalisé avec plusieurs gradins et en ce qu'il s'engage dans le gradin (14) avoisinant le bord décalé vers l'arrière (7) d'un panneau d'isolation thermique (1), la zone de d'arête d'un élément de paroi (2) s'étendant à angle droit aux surfaces de paroi (3, 4) de ce panneau d'isolation thermique.

6. Appareil de réfrigération et/ou de congélation selon la revendication 1 ou l'une des suivantes, caractérisé en ce que l'élément de fermeture (5) est recouvert par une baguette de recouvrement (12, 12.1) à profil adapté en un matériau isolant thermiquement.

7. Appareil de réfrigération et/ou de congélation selon la revendication 1 ou l'une des suivantes, caractérisé en ce que le bord décalé vers l'arrière (7) présente au moins sur une partie de sa longueur une ou plusieurs languettes coudées (13) sur lesquelles est fixée une baguette de recouvrement (12) recouvrant l'élément de fermeture (5) ou d'autres pièces montées.

8. Appareil de réfrigération et/ou de congélation selon la revendication 5 ou l'une des suivantes, caractérisé en ce que la baguette de recouvrement (12) est disposée entre l'élément de fermeture (5) et la zone de l'arête frontale (16) de l'élément de paroi (2).

9. Appareil de réfrigération et/ou de congélation selon la revendication 8, caractérisé en ce qu'il est disposé entre une surface frontale (16) de l'élément de paroi (2) et la bague de recouvrement (12) un joint d'étanchéité (20).

10. Appareil de réfrigération et/ou de congélation selon la revendication 5 ou l'une des suivantes, caractérisé en ce que l'élément de paroi (2) porte à sa surface frontale (16) orientée vers l'élément de fermeture avoisinant (5) une baguette de recouvrement (12.1) en un matériau isolant thermiquement qui passe sur un élément de fermeture (5.2) de l'élément de paroi.

11. Appareil de réfrigération et/ou de congélation selon la revendication 2 ou l'une des suivantes, caractérisé en ce que sont fixés au tronçon de bord libre (8) faisant saillie sur la zone de liaison (9) une partie de palier de pivotement (10) et/ou un élément de commande, de réglage et/ou d'indication.

12. Appareil de réfrigération et/ou de congélation selon la revendication 1 ou l'une des suivantes, caractérisé en ce que l'élément de fermeture (5) est réalisé sous forme de membrane avec une conductivité de chaleur réduite.
